# EUROPÄISCHE PATENTSCHRIFT

(11) **EP 0 443 118 B1**
(45) Veröffentlichungstag und Bekanntmachung des Hinweises auf die Patenterteilung: **25.01.1995**
(21) Anmeldenummer: 90122980.7
(22) Anmeldetag: 30.11.1990
(51) Int. Cl.: H02G 15/013

(54) **Geteilter Dichtungsring aus Kunststoff für Dichtungskörper bei Kabelgarnituren**
Divided sealing ring of synthetic material for sealing body in cable fittings
Anneau d'étanchéité divisé en matériau synthétique pour corps d'étanchéité de garnitures de câble

(30) Priorität: 23.02.1990 DE 4005816
(43) Veröffentlichungstag der Anmeldung: 28.08.1991
(73) Patentinhaber: RXS Schrumpftechnik-Garnituren GmbH, D-58093 Hagen (DE)
(72) Erfinder: Greisinger, Martin, W-5860 Iserlohn (DE)
(74) Vertreter: Fuchs, Franz-Josef, Dr.-Ing.

(56) Entgegenhaltungen:
- EP-A- 0 417 608
- DE-C- 692 573
- FR-A- 2 066 926
- US-A- 3 642 291
- US-A- 4 538 021

## Beschreibung

Die Erfindung betrifft einen geteilten Dichtungsring aus Kunststoff für Dichtungskörper bei Kabelgarnituren, bestehend aus einem elastischen Schlauch mit einem die Schnittstelle überbrückenden Verbindungsglied im Inneren des Dichtungsringes, wobei das Verbindungsglied aus mindestens zwei ineinanderrastenden Kupplungsgliedern besteht und daß diese Kupplungsglieder fest im Inneren des Dichtungsringes angeordnet sind, wobei mindestens ein Kupplungsglied die Berührungsebene mit einem Fortsatz überbrückt.

Bei Kabelmuffen, die aus einem zylindrischen Mittelteil und zwei stirnseitigen Dichtungskörpern zum Einführen der Kabel bestehen, sind unter anderem Dichtungen zwischen dem äußeren Umfang des Dichtungskörpers und der Innenwandung des zylindrischen Teils nötig. Hier werden im allgemeinen geschlossene Runddichtungen verwendet. Beim Anlegen einer solchen Muffe über ungeschnittene Kabel oder über einen bereits gefertigten Kabelspleiß ist jedoch die Anbringung eines Dichtungsringes nicht möglich. Der Dichtungsring muß also aufgeschnitten werden und kann dann erst über das Kabel und schließlich auf den Dichtungskörper gelegt werden, wobei der Dichtungsring an seiner Schnittstelle wieder verbunden werden muß. Bisher wurde eine solche Verbindung durch Verkleben der Enden in einer Zentrierform durchgeführt. Besonders unbefriedigend ist das Ergebnis bei dieser Lösung, wenn der Dichtungsring aus einem für Dichtungszwecke sehr gut geeigneten Silikonkautschuk verwendet wird; denn die Aushärtezeit eines solchen Klebers nimmt mehrere Stunden in Anspruch. Nun ist auch eine geteilte Runddichtung für Dichtungskörper bekannt, bei der ein dickwandiger, elastischer Schlauch als Runddichtung eingesetzt wird, wobei dieser Schlauch quergeteilt ist. An der Schnittstelle wird nun zur Überbrückung ins Innere der Schlauchenden ein Verbindungsstift eingeführt. Hier ist von Nachteil, selbst wenn die Oberflächen des Verbindungsstiftes entsprechend profiliert sind, daß die Schnittstelle unter Umständen undicht wird, wenn die Kabelmuffe entsprechenden mechanischen Beanspruchungen oder Temperaturschwankungen ausgesetzt wird. Diese Schnittstelle ist also bezüglich ihrer Dichtigkeit problematisch.

Aus der US-Patentschrift US-A-4.538.021 sind geteilte Dichtungsringe bekannt, die in ihrer Schnittstelle überbrückende Verbindungsglieder enthalten. Hier werden profilierte Stifte verwendet, die in korrespondierende Bohrungen der Dichtungsringe eingesteckt werden. Dabei wird ein zusätzliches Dichtungsmittel in Form eines vulkanisierbaren Materials eingebracht, da sonst die Dichtigkeit bei den gegebenen Beanspruchungen nicht erreicht werden kann.

So liegt dieser Erfindung die Aufgabe zugrunde, die Verbindungsstelle bei geschnittenen Dichtungsringen so zu gestalten, daß auch bei den genannten Beanspruchungen eine einwandfreie Dichtigkeit gewährleistet werden kann. Die gestellte Aufgabe wird nun mit einem geteilten Dichtungsring der eingangs erläuterten Art dadurch gelöst, daß die fest im Inneren des Dichtungsringes angeordneten korrespondierenden Kupplungsteile jeweils so weit im Inneren des Dichtungsringes zurückversetzt und im Abstand so aufeinander abgestimmt sind, daß das Einrasten des überbrückenden Fortsatzes unter Druck bei Ausnutzung der Elastizität des elastischen Materials des Dichtungsringes erfolgt und daß die Teilungsflächen in der Berührungsebene konkav ausgebildet sind.

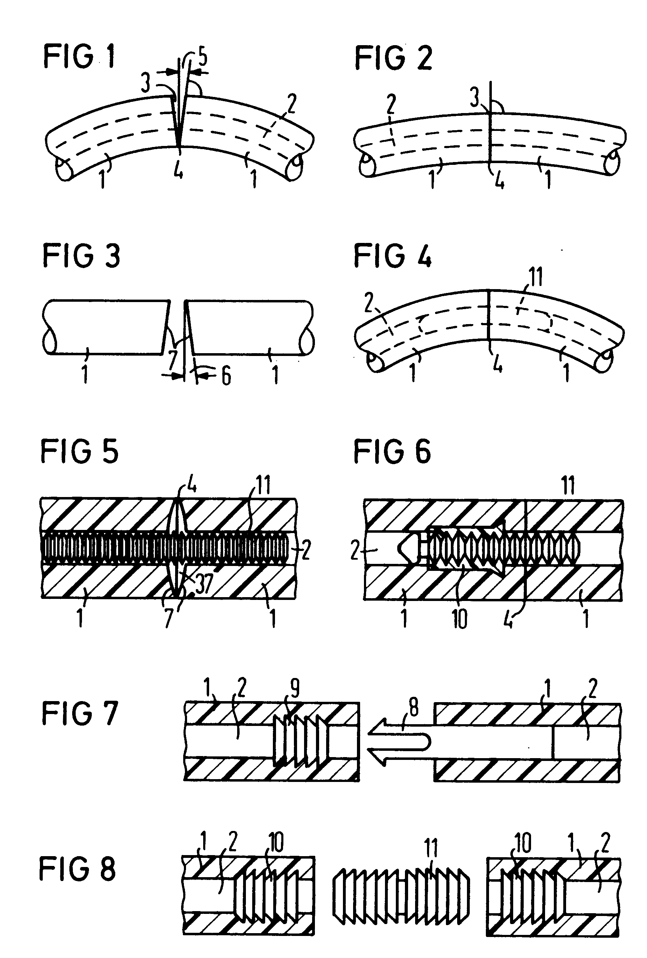

Der Vorteil der Erfindung liegt nun in erster Linie darin, daß die Enden des Dichtungsringes an seiner Trennstelle mit einem eingerasteten Verbindungsglied zusammengehalten werden, wobei die einzelnen Kupplungsglieder innerhalb des Dichtungsringes so angeordnet sind, daß die Trennflächen auch nach deren Einrasten gegeneinander gepreßt sind. Auf diese Weise wird genügend Anpreßdruck gewährleistet, der die Trennstelle des Dichtungsringes auch bei mechanischen und thermischen Belastungen dichthält. Außerdem ist zweckmäßig, die Trennflächen an den Enden des Dichtungsringes schräg gegeneinander zu stellen und zwar so, daß die gemeinsame Berührungsfläche beider Trennflächen nach dem Einrasten in einer Radialebene liegt, so daß der Anpreßdruck über die ganze Fläche hinweg gleichmäßig verteilt ist. Außerdem wird verhindert, daß sich bei der Krümmung des Dichtungsringes entsprechend des Durchmessers des Dichtungskörpers in der Berührungsfläche 4 ein nach auswärts sich verbreiternder, keilförmiger Spalt 3 ausbildet, wie dies bisher der Fall war und in der Figur 1 verdeutlicht wird. Die Spaltbreite ist dabei abhängig vom Krümmungsradius und sie wird umso kleiner je größer der Durchmesser des Dichtungskörpers ist, wie zusätzlich aus der Figur 2 verdeutlicht wird.

Die Erfindung wird nun anhand von vierzehn Figuren näher erläutert.
- Figur 1: zeigt den Stand der Technik bei kleinem Krümmungsradius.
- Figur 2: zeigt den Stand der Technik bei großem Krümmungsradius.
- Figur 3: zeigt die Ausbildung der Enden in der Trennstelle gemäß der Erfindung.
- Figur 4: zeigt die Ausführung gemäß der Erfindung nach dem Zusammenfügen der Enden.
- Figur 5: erläutert die Ausbildung der Trennflächen in Konkavform.
- Figur 6: zeigt ein Verbindungsglied, bestehend aus einer Hülse und einem die Trennstelle überbrückenden Fortsatz im bereits montierten Zustand.
- Figur 7: zeigt ein weiteres Ausführungsbeispiel mit einer Hülse und einem überbrückenden Fortsatz.
- Figur 8: zeigt ein Ausführungsbeispiel mit zwei Hülsen und einem überbrückenden Fortsatz.
- Figur 9: zeigt ein drittes Ausführungsbeispiel mit einer Hülle und einem überbrückenden Fortsatz.
- Figur 10: zeigt nur die Einsatzteile als Kupplungsglieder ohne Dichtungsring in Form einer Rastzunge und einer Rastnut.
- Figur 11: zeigt ebenfalls nur die Einsatzteile als Kupplungsglieder in Form einer Rastzunge und einer Rastnut.
- Figur 12: zeigt längsgeteilte Kupplungsglieder, die innerhalb des Dichtungsringes übereinandergreifend eingerastet werden.
- Figur 13: zeigt den Einsatz von Federelementen in den Kupplungsgliedern.
- Figur 14: zeigt einen stirnseitigen Dichtungskörper einer Kabelmuffe mit montiertem Dichtungsring.

Die Figuren 1 und 2 zeigen, wie bereits eingangs erwähnt, die Verhältnisse bei einem Dichtungsring 1 nach dem Stand der Technik. Hier besteht die Gefahr, daß durch die Bildung eines Spaltes 3 in der gemeinsamen Berührungsebene 4 Undichtigkeiten auftreten. Die zu erwartende Größe des Spaltes 3 hängt im wesentlichen vom Krümmungsradius des Dichtungsringes und damit vom Durchmesser des Dichtungskörpers ab.

Die Figur 3 zeigt, wie die Dichtungsverhältnisse in der Berührungsebene 4 gemäß der Erfindung erheblich verbessert werden können. So werden die Teilungsflächen 7 an jedem Ende des Dichtungsringes 1 jeweils unter einem vom Krümmungsradius des montierten Dichtungsringes 1 abhängigen Winkel 6 abgeschrägt, so daß beide Teilungsflächen 7 gegeneinander geneigt sind.

Die Figur 4 zeigt nun den montierten Zustand des Dichtungsringes 1 mit seinen in der gemeinsamen Berührungsebene 4 zusammengefügten Enden, die nach den in Figur 3 gezeigten Verhältnissen abgeschrägt sind. Bei einer solchen Ausbildung ergeben sich über die gesamte Berührungsebene 4 hinweg gleiche Verhältnisse, so daß sich kein Spalt mehr ausbilden kann. In dieser Figur ist weiterhin angedeutet, daß im Inneren 2 des Dichtungsringes 1 ein Verbindungsglied 11 eingelagert ist, das sich über die Berührungsebene 4 hinweg erstreckt. In einfacher Weise sind, wie eingangs erwähnt, solche Verbindungsglieder bereits bekannt. Doch reicht die bekannte Art nicht aus, um sichere Dichtungsverhältnisse in der Berührungsebene 4 gewährleisten zu können. Bei mechanischen und/oder thermischen Beanspruchungen der Kabelmuffe kann es vorkommen, daß die Dichtungsringenden vom Verbindungsglied abgleiten. Dadurch treten wiederum Undichtigkeiten in der Trennfläche auf.

So werden nun in den folgenden Figuren Ausführungsformen gemäß der Erfindung behandelt, bei denen die beschriebenen Probleme nicht mehr auftreten können.

Die Figur 5 zeigt den Trennbereich des Dichtungsringes 1, bei dem die Teilungsflächen 7, zusätzlich zu den Schrägabschnitten eine konkave Ausbildung zeigen, so daß die Außenbereiche der Teilungsflächen 7 mehr belastet sind als der Innenbereich 37. Dies hat den Vorteil, daß die Teilungsflächen 7 beim Zusammenpressen der Enden an den Außenbereichen mit höherem Anpreßdruck zusammengefügt werden. Auf diese Weise ist bei ungleicher Belastung der Berührungsfläche 4 eine zusätzliche Anpreßsicherheit gegeben. In dieser Figur ist im Inneren 2 des Dichtungsringes 1 ein Verbindungsglied 11 mit gerillter Oberfläche angedeutet, wie es bereits aus dem Stand der Technik bekannt ist. Da die innere Wandung des Dichtungsringes 1 jedoch glatt ist, können die Enden des Dichtungsringes 1, wie vorher bereits angedeutet, trotzdem auf dem Verbindungsglied 11 abrutschen, so daß der Anpreßdruck in der Berührungsebene 4 nachläßt. Trotz der beschriebenen Verbesserung durch die Ausbildung der Teilungsflächen 7 ist hier noch keine absolute Sicherheit gegeben und die konkave Ausbildung der Teilungsflächen 7 wäre zum Stand der Technik gesehen nur eine geringfügige Verbesserung. Im Zusammenhang mit den erfindungsgemäßen Verbindungsgliedern ergeben sich jedoch entscheidend bessere Dichtungsverhältnisse höherer Sicherheit.

Die Figur 6 zeigt nun ein erstes Ausführungsbeispiel gemäß der Erfindung, bei dem gewährleistet ist, daß die einmal hergestellten Dichtungsverhältnisse auch bei ungünstigen Beanspruchungen erhalten bleiben. Hier wird nämlich ein Verbindungsglied 10-11 mit einem überbrückenden Kupplungsglied, zum Beispiel mit gerillter Oberfläche, gewählt, welches sich über die Berührungsfläche 4 der Enden des Dichtungsringes 1 hinwegerstreckt und in dem als Hülse 10 ausgebildeten zweiten Kupplungsglied eingerastet wird. Im Inneren 2 des einen Endes des Dichtungsringes 1 ist die Hülse 10 und im anderen Ende das als Fortsatz 11 ausgebildete zweite Kupplungsglied fest angeordnet, zum Beispiel durch Kleben, Klemmen oder Spreizen. Außerdem ist die Hülse 10 so weit ins Innere 2 des Dichtungsringes 1 zurückversetzt, daß der Fortsatz 11 unter Ausnutzung der Elastizität des Dichtungsringmaterials zunächst federnd eingerastet werden kann. Anschließend bleibt ein durch die Elastizität bedingter Anpreßdruck in der Berührungsebene 4 erhalten, wodurch die Dichtungsverhältnisse begünstigt werden. Ein Abgleiten der Enden des Dichtungsringes 1 ist nun infolge der Einrastung der Kupplungsglieder nicht mehr möglich, so daß Veränderungen durch mechanische oder thermische Belastungen am Dichtungsbereich nicht mehr in Erscheinung treten können.

Figur 7 zeigt die Enden des Dichtungsringes 1 mit einem Verbindungsglied 8-9, bestehend aus einer im Inneren 2 vom Ende her zurückversetzten Hülse 9 und einem Kupplungsglied mit einem die Berührungsebene überbrückenden Fortsatz 8. Dieser Fortsatz 8 ist längsgeschlitzt und besitzt am Ende Widerhaken, die sich nach Einführung in die Hülse 9 verhakend aufspreizen. Durch das Rückversetzen der Hülse 9 wird wiederum die Elastizität des Dichtungsringmaterials ausgenützt, so daß in Abstimmung der Distanzen der nötige Anpreßdruck in der Berührungsebene erreicht wird.

Figur 8 zeigt ein Ausführungsbeispiel eines Verbindungsgliedes 10-11 mit je einer profilierten Hülse 10 in jedem Ende des Dichtungsringes 1. Als die Berührungsebene 4 überbrückendes Element ist ein korrespondierend profiliert ausgebildeter Fortsatz 11 vorgesehen, der rastend in beide Hülsen 10 eingedrückt und verhakt wird. Damit ist auch in diesem Fall die Verbindungsstelle gesichert.

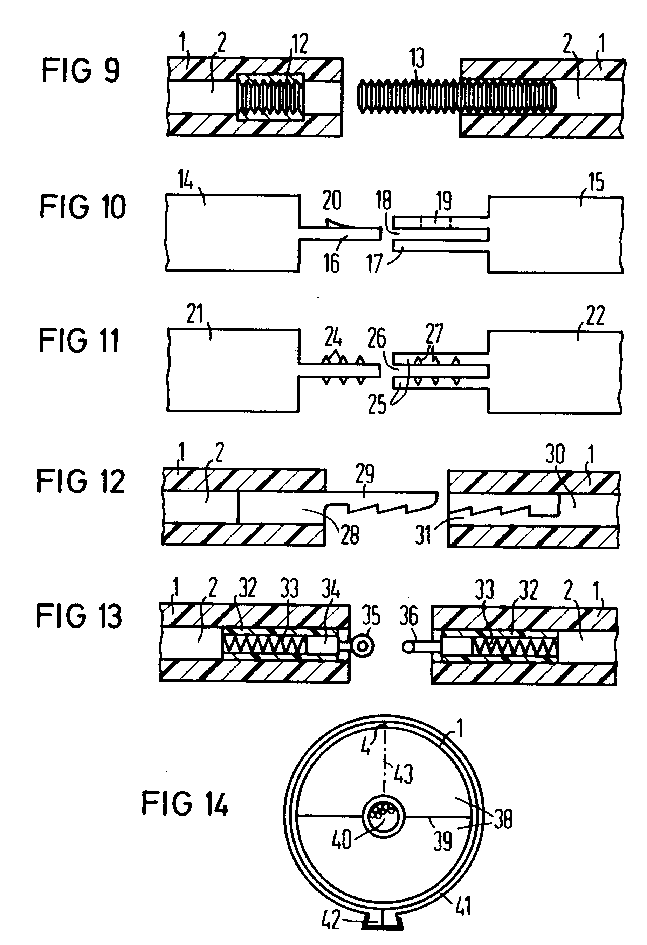

Figur 9 zeigt ein weiteres Ausführungsbeispiel eines Verbindungsgliedes 12-13 gemäß der Erfindung mit einer fest angeordneten Hülse 12 im Inneren 2 des einen Endes des Dichtungsringes 1. In diese Hülse 12 wird ein durch einen Längsschlitz federnd ausgebildeter Fortsatz 13 als Kupplungsglied mit entsprechend profilierter und zur Hülse 12 passender Oberfläche eingeführt. Der sichere Sitz ist somit auch hier gewährleistet.

In Figur 10 sind der Deutlichkeit wegen nur das Verbindungsglied 14-15 dargestellt, dessen Kupplungsglieder in das Innere 2 des Dichtungsringes 1 fest eingesetzt werden. Hier ist das eine Kupplungsglied als Rastzunge 16 mit einem federnden Rastelement 20 ausgebildet, welche in die Rastnut 18, gebildet durch zwei Lappen 17, des zweiten Kupplungsgliedes rastend eingeführt wird. In eine Aussparung 19 rastet im Endzustand das Rastelement 20 ein, wodurch die Enden wiederum fixiert sind.

Die Figur 11 zeigt eine Variation zur Ausbildung nach Figur 10. Hier sind auf der Rastzunge 23 mehrere hakenförmige Elemente 24 angeordnet, die sich in die Rastnut 26, gebildet durch zwei Lappen 25, in entsprechende Gegenelemente 27 verhaken.

Die Figur 12 zeigt ein Ausführungsbeispiel eines Verbindungsgliedes 28-30 mit zwei Kupplungsgliedern 28 und 30, wobei jedes einen Fortsatz 29 bzw. 31 aufweist. Das eine Kupplungsglied 30 ist mit seinem Fortsatz 31 im Inneren 2 des Dichtungsringes 1 zurückversetzt angeordnet, so daß nur der zweite Fortsatz 29 des Kupplungsgliedes 28 die Berührungsebene überbrückt und dann im Gegenspiel mit dem Fortsatz 31 gewissermaßen in dem als Hülse wirkenden Dichtungsring 1 verhakt wird.

Die Figur 13 zeigt schließlich, daß auch Federelemente 33 in den Kupplungsgliedern des jeweiligen Verbindungsgliedes 32-32 eingesetzt werden können. Dies kann ganz allgemein auch bei anderen Ausführungsformen erfolgen. Hier sind jedoch die Federelemente 33 in Führungshülsen 32 angeordnet, die im Inneren 2 der Enden des Dichtungsringes 1 fest angeordnet sind. Als eigentliche Kupplungsglieder sind hier ein Haken 36 und eine Hülse 35 angedeutet, doch können auch andere Rastelemente vorgesehen werden. Bei einer solchen Asuführungsform können die nötigen Anpreßkräfte in der Berührungsebene noch gezielter bestimmt werden.

Die Figur 14 zeigt schließlich den Einsatz eines Dichtungsringes 1 auf dem Umfang des geteilten Dichtungskörpers 38 einer Kabelmuffe. Der Dichtungsring 1 dient dabei jeweils als Abdichtelement zwischen einem stirnseitigen Dichtungskörper 38 und dem Muffenrohr 41, das mit Hilfe einer Verschlußvorrichtung 42 auf die beiden stirnseitig angeordneten Dichtungskörper 38 dichtend aufgezogen wird. Außerdem ist hier zum Verständnis die gedachte Radialebene 43 strichpunktiert eingezeichnet, in welcher die Berührungsebene 4 des Dichtungsringes 1 gemäß der Erfindung infolge der Schrägschnitte seiner Enden liegen sollen.

Als weitere Verbesserung, insbesondere bei sehr großen Krümmungen, ist empfehlenswert, die überbrückenden Fortsätze ebenfalls entsprechend der Krümmung des montierten Dichtungsringes zu biegen. Dadurch ist eine weitere Anpassung in diesem Trennbereich gegeben. Die Verbindungsglieder bestehen im wesentlichen aus Kunststoff, vorzugsweise aus Polyethylen, doch kann hierfür ebenso Metall verwendet werden. Unter Umständen ist auch eine Kombination von Metall und Kunststoffmaterial nützlich. Der Dichtungsring besteht aus elastischem Kunststoffmaterial, vorzugsweise aus Silikonkautschuk.

Wie bereits erwähnt, kann bei entsprechender Dimensionierung der Abstände zwischen den Kupplungsgliedern im Zusammenhang mit der Elastizität des Dichtungsmaterials sogar darauf verzichtet werden, daß die Teilungsflächen an den Enden schräg verlaufen. Sie liegen somit parallel zueinander und senkrecht zur Längsausdehnung des Dichtungsringes.

Die Rastelemente der Kupplungsglieder können sowohl lösbar, wie auch unlösbar ausgebildet sein. Die lösbare Ausbildung begünstigt die Handhabung z.B. bei Reparaturarbeiten.

Ganz allgemein ist von Vorteil, wenn die Kupplungsglieder gegen Verdrehen gesichert sind, wie dies z.B. bereits bei den Ausführungsbeispielen nach den Figuren 10, 11, 12 oder 13 der Fall ist.

Im übrigen können bei Bedarf die Teilungsflächen auch als Profil- oder Labyrinthdichtungen ausgebildet werden, wenn besonders kritische Dichtungsverhältnisse vorliegen.

## Patentansprüche

1. Geteilter Dichtungsring aus Kunststoff für Dichtungskörper bei Kabelgarnituren, bestehend aus einem elastischen Schlauch mit einem die Schnittstelle überbrückenden Verbindungsglied, im Inneren des Dichtungsringes, wobei das Verbindungsglied (8-9, 10-11, 12-13, 14-15, 21-22, 28-30, 32-32) aus mindestens zwei ineinanderrastenden Kupplungsgliedern (8, 9, 10, 11, 12, 13, 14, 15, 21, 22, 28, 30, 32) besteht und daß diese Kupplungsglieder fest im Inneren des Dichtungsringes (1) angeordnet sind, wobei mindestens ein Kupplungsglied die Berührungsebene (4) mit einem Fortsatz (8, 11, 13, 16, 23, 29, 35) überbrückt,
**dadurch gekennzeichnet**,
daß die fest im Inneren des Dichtungsringes (1) angeordneten, korrespondierenden Kupplungsteile jeweils so weit im Inneren des Dichtungsringes (1) zurückversetzt und im Abstand so aufeinander abgestimmt sind, daß das Einrasten des überbrückenden Fortsatzes (8, 11, 13, 16, 23, 29, 35) unter Druck bei Ausnutzung der Elastizität des elastischen Materials des Dichtungsringes (1) erfolgt und daß die Teilungsflächen (7) in der Berührungsebene (4) konkav ausgebildet sind.

2. Geteilter Dichtungsring nach Anspruch 1,
**dadurch gekennzeichnet**,
daß die Kupplungsglieder (8, 9, 10, 12, 13, 14, 15, 21, 28, 30, 32) im Dichtungsring (1) eingeklebt sind.

3. Geteilter Dichtungsring nach Anspruch 1,
**dadurch gekennzeichnet**,
daß die Kupplungsglieder (8, 9, 10, 12, 13, 14, 15, 21, 22, 28, 30, 32) im Dichtungsring (1) eingeklemmt sind.

4. Geteilter Dichtungsring nach Anspruch 1,
**dadurch gekennzeichnet**,
daß die Kupplungsglieder (8, 9, 10, 12, 13, 14, 15, 21, 22, 28, 30, 32) im Dichtungsring (1) eingespreizt sind.

5. Geteilter Dichtungsring nach einem der vorhergehenden Ansprüche,
**dadurch gekennzeichnet**,
daß die Kupplungsglieder unlösbar miteinander verbunden sind.

6. Geteilter Dichtungsring nach einem der Ansprüche 1 bis 5,
**dadurch gekennzeichnet**,
daß die Kupplungsglieder lösbar miteinander verhakt sind.

7. Geteilter Dichtungsring nach einem der vorhergehenden Ansprüche,
**dadurch gekennzeichnet**,
daß die Teilungsflächen (7) des Dichtungsringes (1) senkrecht zur Längsausdehnung parallel zueinander angeordnet sind.

8. Geteilter Dichtungsring nach einem der Ansprüche 1 - 6,
**dadurch gekennzeichnet**,
daß die Teilungsflächen (7) des Dichtungsringes (1) an den sich gegenüberliegenden Enden so gegeneinander geneigt sind, daß die gemeinsame Berührungsebene (4) der Teilungsflächen (7) nach dem kreisförmigen Zusammenfügen des Dichtungsringes (1) auf dem Dichtungskörper (38) in einer Radialebene (43) des Dichtungskörpers (38) liegt.

9. Geteilter Dichtungsring nach einem der vorhergehenden Ansprüche,
**dadurch gekennzeichnet**,
daß die Teilungsflächen (7) des Dichtungsrings (1) als Profil- oder Labyrinth-Dichtung ausgebildet sind.

10. Geteilter Dichtungsring nach einem der vorhergehenden Ansprüche,
**dadurch gekennzeichnet**,
daß ein Kupplungsglied als Hülse (9) ausgebildet ist, in die ein geschlitzter Fortsatz (8) einführbar ist, der nach dem Einführen rastend aufgespreizt ist.

11. Geteilter Dichtungsring nach einem der Ansprüche 1 bis 9,
**dadurch gekennzeichnet**,
daß mindestens eine Federhülse (10) mit innerer Raststruktur im Inneren (2) angeordnet ist,in die ein Fortsatz (11) mit korrespondierender Raststruktur auf der Oberfläche einführbar ist.

12. Geteilter Dichtungsring nach einem der Ansprüche 1 bis 9,
**dadurch gekennzeichnet**,
daß ein Kupplungsglied als Rasthülse (12) ausgebildet ist, in welche ein längsgeschlitzter Fortsatz (13) mit Raststruktur auf seiner Oberfläche einführbar ist.

13. Geteilter Dichtungsring nach einem der Ansprüche 1 bis 9,
**dadurch gekennzeichnet**,
daß das eine Kupplungsglied als Rastzunge (16, 23) und das zweite als Rastnut (18, 26) mit jeweils entsprechenden Rastelementen (19-20, 24-27) ausgebildet sind.

14. Geteilter Dichtungsring nach einem der Ansprüche 1 bis 9,
**dadurch gekennzeichnet**,
daß beide Kupplungsglieder als Fortsätze (29, 31) ausgebildet sind, die innerhalb eines Dichtungsringes überlappend einrastbar sind.

15. Geteilter Dichtungsring nach einem der Ansprüche 1 bis 9,
**dadurch gekennzeichnet**,
daß haken- und ösenförmige Fortsätze (35, 36) als Kupplungsglieder im Inneren (2) angeordnet sind.

16. Geteilter Dichtungsring nach einem der vorhergehenden Ansprüche,
**dadurch gekennzeichnet**,
daß Federelemente (33) in den Kupplungsgliedern angeordnet sind.

17. Geteilter Dichtungsring nach einem der vorhergehenden Ansprüche,
**dadurch gekennzeichnet**,
daß der die Berührungsfläche (4) überbrückende Fortsatz eine dem Durchmesser des Dichtungskörpers (38) angepaßte Krümmung aufweist.

18. Geteilter Dichtungsring nach einem der vorhergehenden Ansprüche,
**dadurch gekennzeichnet**,
daß die Kupplungsglieder eine Sicherung gegen Verdrehen aufweisen.

19. Geteilter Dichtungsring nach einem der vorhergehenden Ansprüche,
**dadurch gekennzeichnet**,
daß das Verbindungsglied aus Kunststoff, vorzugsweise aus Polyethylen, besteht.

20. Geteilter Dichtungsring nach einem der Ansprüche 1 bis 17,
**dadurch gekennzeichnet**,
daß das Verbindungsglied aus Metall besteht.

21. Geteilter Dichtungsring nach einem der Ansprüche 1 bis 17,
**dadurch gekennzeichnet**,
daß die einzelnen Kupplungsglieder aus verschiedenen Materialien bestehen.

22. Geteilter Dichtungsring nach einem der vorhergehenden Ansprüche,
**dadurch gekennzeichnet**,
daß er aus elastischem Kunststoffmaterial, vorzugsweise aus Silikonkautschuk besteht.

## Claims

1. Divided sealing ring of plastic for sealing members in cable fittings, comprising a flexible hose with a connecting element which is inside the sealing ring and bridges the cut location, the connecting element (8-9, 10-11, 12-13, 14-15, 21-22, 28-30, 32-32) comprising at least two interengaging coupling elements (8, 9, 10, 11, 12, 13, 14, 15, 21, 22, 28, 30, 32) and these coupling elements being arranged fixedly inside the sealing ring (1), at least one coupling element bridging the contact plane (4) by a continuation (8, 11, 13, 16, 23, 29, 35), characterized in that the corresponding coupling parts, arranged fixedly inside the sealing ring (1), are in each case set back inside the sealing ring (1) to such an extent and are spaced apart in such a way that the engaging of the bridging continuation (8, 11, 13, 16, 23, 29, 35) takes place under pressure, utilizing the elasticity of the flexible material of the sealing ring (1), and in that the dividing surfaces (7) are formed concavely in the contact plane (4).

2. Divided sealing ring according to Claim 1, characterized in that the coupling elements (8, 9, 10, 12, 13, 14, 15, 21, 28, 30, 32) are adhesively affixed in the sealing ring (1).

3. Divided sealing ring according to Claim 1, characterized in that the coupling elements (8, 9, 10, 12, 13, 14, 15, 21, 22, 28, 30, 32) are clamped in place in the sealing ring (1).

4. Divided scaling ring according to Claim 1, characterized in that the coupling elements (8, 9, 10, 12, 13, 14, 15, 21, 22, 28, 30, 32) are braced in place in the sealing ring (1).

5. Divided sealing ring according to one of the preceding claims, characterized in that the coupling elements are undetachably connected to one another.

6. Divided sealing ring according to one of Claims 1 to 5, characterized in that the coupling elements are detachably hooked to one another.

7. Divided sealing ring according to one of the preceding claims, characterized in that the dividing surfaces (7) of the sealing ring (1) are arranged perpendicular to the longitudinal extent and parallel to one another.

8. Divided sealing ring according to one of Claims 1-6, characterized in that the dividing surfaces (7) of the sealing ring (1) are inclined relative to one another at the ends lying opposite one another such that the common contact plane (4) of the dividing surfaces (7) lies in a radial plane (43) of the sealing member (38) after the circular joining together of the sealing ring (1) on the sealing member (38).

9. Divided sealing ring according to one of the preceding claims, characterized in that the dividing surfaces (7) of the sealing ring (1) are formed as a profile seal or labyrinth seal.

10. Divided sealing ring according to one of the preceding claims, characterized in that one coupling element is formed as a sleeve (9), into which there can be introduced a slotted continuation (8), which spreads open in an engaging fashion after introduction.

11. Divided sealing ring according to one of Claims 1 to 9, characterized in that on the inside (2) there is arranged at least one spring sleeve (10) which has an inner engaging structure and into which a continuation (11) with a corresponding engaging structure on the surface can be introduced.

12. Divided sealing ring according to one of Claims 1 to 9, characterized in that one coupling element is formed as an engaging sleeve (12), into which a longitudinally slotted continuation (13) with an engaging structure on its surface can be introduced.

13. Divided sealing ring according to one of Claims 1 to 9, characterized in that the one coupling element is formed as an engaging tongue (16, 23) and the second coupling element is formed as an engaging groove (18, 26) with in each case corresponding engaging elements (19-20, 24-27).

14. Divided sealing ring according to one of Claims 1 to 9, characterized in that both coupling elements are formed as continuations (29, 31) which can engage in an overlapping fashion within a sealing ring.

15. Divided sealing ring according to one of Claims 1 to 9, characterized in that hook-shaped and eye-shaped continuations (35, 36) are arranged on the inside (2) as coupling elements.

16. Divided sealing ring according to one of the preceding claims, characterized in that spring elements (33) are arranged in the coupling elements.

17. Divided sealing ring according to one of the preceding claims, characterized in that the continuation bridging the contact surface (4) has a curvature adapted to the diameter of the sealing member (38).

18. Divided sealing ring according to one of the preceding claims, characterized in that the coupling elements have a securement against turning.

19. Divided sealing ring according to one of the preceding claims, characterized in that the connecting element consists of plastic, preferably of polyethylene.

20. Divided sealing ring according to one of claims 1 to 17, characterized in that the connecting element consists of metal.

21. Divided sealing ring according to one of claims 1 to 17, characterized in that the individual coupling elements consist of different materials.

22. Divided sealing ring according to one of the preceding claims, characterized in that it consists of flexible plastics material, preferably of silicone rubber.

## Revendications

1. Anneau d'étanchéité fendu en matière plastique pour organes d'étanchéité dans le cas de garnitures de câbles, constitué par un tuyau élastique comportant un organe d'accouplement traversant l'interface, à l'intérieur de l'anneau d'étanchéité, l'organe d'accouplement (8-9, 10-11, 12-13, 14-15, 21-22, 28-30, 30-32) étant constitué par au moins deux organes d'accouplement (8,9,10,11,12,13,14,15,21, 22,28,30,32) s'encliquetant l'un dans l'autre et ces organes organes d'accouplement étant montés fixes à l'intérieur de l'anneau d'étanchéité (1), au moins un organe d'accouplement traversant le plan de contact (4) au moyen d'un prolongement (8,11,13,16,23,29,35),
caractérisé par le fait que les organes d'accouplement correspondants, qui sont montés fixes à l'intérieur de l'anneau d'étanchéité (1) sont disposés en retrait à l'intérieur de l'anneau d'étanchéité (1) et sont réglés l'un sur l'autre à une certaine distance de sorte que l'encliquetage du prolongement traversant (8,11,13,16,23,29, 35) s'effectue sous pression, moyennant l'utilisation de l'élasticité du matériau élastique de l'anneau d'étanchéité (1) et que les surfaces de séparation (7) possèdent une forme concave dans le plan de contact (4).

2. Anneau d'étanchéité fendu suivant la revendication 1, caractérisé par le fait que les organes d'accouplement (8,9,10,12,13,14,15,21,28,30,32) sont collés dans l'anneau d'étanchéité (1).

3. Anneau d'étanchéité fendu suivant la revendication 1, caractérisé par le fait que les organes d'accouplement (8,9,10,12,13,14,15,21,28,30,32) sont bloqués par serrage dans l'anneau d'étanchéité (1).

4. Anneau d'étanchéité fendu suivant la revendication 1, caractérisé par le fait que les organes d'accouplement (8,9,10,12,13,14,15,21,28,30,32) sont insérés par écartement dans l'anneau d'étanchéité (1).

5. Anneau d'étanchéité fendu suivant l'une des revendications précédentes, caractérisé par le fait que les organes d'accouplement sont réunis entre eux d'une manière inamovible.

6. Anneau d'étanchéité fendu suivant l'une des revendications 1 à 5, caractérisé par le fait que les organes d'accouplement sont accrochés l'un à l'autre de façon amovible.

7. Anneau d'étanchéité fendu suivant l'une des revendications précédentes, caractérisé par le fait que les surfaces de séparation (7) de l'anneau d'étanchéité (1) sont disposées parallèlement l'une à l'autre et perpendiculairement à la direction longitudinale.

8. Anneau d'étanchéité fendu suivant l'une des revendications 1-6, caractérisé par le fait que les surfaces de séparation (7) de l'anneau d'étanchéité (1) sont inclinées réciproquement au niveau de leurs extrémités en vis-à-vis de telle sorte que le plan commun de contact (4) des surfaces de séparation (7) est situé, après l'assemblage circulaire de l'anneau d'étanchéité (1) sur l'organe d'étanchéité (38), dans un plan radial (43) de l'organe d'étanchéité (38).

9. Anneau d'étanchéité fendu suivant l'une des revendications précédentes, caractérisé par le fait que les surfaces de séparation (7) de l'anneau d'étanchéité (1) sont réalisées sous la forme d'un élément d'étanchéité profilé ou à labyrinthe.

10. Anneau d'étanchéité fendu suivant l'une des revendications précédentes, caractérisé par le fait qu'un organe d'accouplement est réalisé sous la forme d'une douille (9), dans laquelle peut être inséré un prolongement fendu (8), qui, après son introduction, est déployé de manière à réaliser un encliquetage.

11. Anneau d'étanchéité fendu suivant l'une des revendications 1 à 9, caractérisé par le fait qu'au moins une douille élastique (10) possédant une structure intérieure d'encliquetage est disposée dans l'espace intérieur (2), dans lequel peut être introduit un prolongement (11) possédant sur sa surface une structure correspondante d'encliquetage.

12. Anneau d'étanchéité fendu suivant l'une des revendications 1 à 9, caractérisé par le fait qu'un organe d'accouplement est agencé sous la forme d'une douille d'encliquetage (12), dans laquelle peut être introduit un prolongement fendu longitudinalement (13) portant sur sa surface une structure d'encliquetage.

13. Anneau d'étanchéité fendu suivant l'une des revendications 1 à 9, caractérisé par le fait qu'un organe d'accouplement est réalisé sous la forme d'une languette d'encliquetage (16,23) et que le second organe d'accouplement est réalisé sous la forme d'une rainure d'encliquetage (18, 26) possédant respectivement des éléments d'encliquetage correspondants (19-20,24-27).

14. Anneau d'étanchéité fendu suivant l'une des revendications 1 à 9, caractérisé par le fait que les deux organes d'accouplement sont réalisés sous la forme de prolongements (29,31), qui peuvent être encliquetés en chevauchement à l'intérieur d'un anneau d'étanchéité.

15. Anneau d'étanchéité fendu suivant l'une des revendications 1 à 9, caractérisé par le fait que des prolongements en forme de crochets et d'oeillets (35,36) sont disposés, en tant qu'organes d'accouplement, dans l'espace intérieur (2).

16. Anneau d'étanchéité fendu suivant l'une des revendications précédentes, caractérisé par le fait que des éléments de ressort (33) sont disposés dans les organes d'accouplement.

17. Anneau d'étanchéité fendu suivant l'une des revendications précédentes, caractérisé par le fait que le prolongement, qui traverse la surface de contact (4), possède une courbure adaptée au diamètre de l'organe d'étanchéité (38).

18. Anneau d'étanchéité fendu suivant l'une des revendications précédentes, caractérisé par le fait que les organes d'accouplement possèdent un système de sécurité vis-à-vis d'une rotation.

19. Anneau d'étanchéité fendu suivant l'une des revendications précédentes, caractérisé par le fait que l'élément de liaison est réalisé en matière plastique, de préférence en polyéthylène.

20. Anneau d'étanchéité fendu suivant l'une des revendications 1 à 17, caractérisé par le fait que l'élément de liaison est formé d'un métal.

21. Anneau d'étanchéité fendu suivant l'une des revendications 1 à 17, caractérisé par le fait que les différents organes d'accouplement sont constitués de différents matériaux.

22. Anneau d'étanchéité fendu suivant l'une des revendications précédentes, caractérisé par le fait qu'il est réalisé en une matière plastique élastique, de préférence en caoutchouc silicone.
